# EUROPEAN PATENT APPLICATION

(11) **EP 4 852 273 A1**
(43) Date of publication of application: **09.12.2026**
(21) Application number: 25180082.7
(22) Date of filing: 02.06.2025
(51) Int. Cl.: H02J 7/00, H02J 9/06, H01M 10/42, H05B 45/00, H05B 47/00

(54) **ENERGY STORAGE DEVICE FOR ELECTRICALLY SUPPLYING AN EMERGENCY CONVERTER**

(71) Applicant: Tridonic GmbH & Co. KG, 6851 Dornbirn (AT)
(72) Inventor: Shukla, Jagjitpati, 6851 Dornbirn (AT); Santiago, Alekssander, 6851 Dornbirn (AT); Hale, Nick, 6851 Dornbirn (AT)
(74) Representative: Rupp, Christian

(57) **Abstract**

The invention relates to an energy storage device (10) for electrically supplying an emergency converter (20). The energy storage device (10) comprises an interface (11) configured to electrically connect the energy storage device (10) to the emergency converter (20), wherein the interface (11) comprises a first, a second and a third terminal (T1, T2, T3); and a memory unit (12) configured to store information about the energy storage device (10); wherein the energy storage device (10) is configured to provide a supply voltage to the emergency converter (20) via the first and the second terminal (T1, T2); and wherein the memory unit (12) is configured to transmit at least a portion of the stored information to the emergency converter (20) via the third terminal (T3).

## Description

### TECHNICAL FIELD

The invention is in the field of emergency lighting devices and power supply of emergency lighting devices. In particular, the invention relates to an energy storage device for electrically supplying an emergency converter, such as an emergency LED driver, and to a method for communicating data from an energy storage device to an emergency converter.

### BACKGROUND

In emergency light systems, converter devices (converters, ballasts, driver devices) are used for providing a supply voltage to an emergency light for a predetermined time in case mains supply fails. The voltage supply is maintained in case of a mains supply failure for a rated service time using energy stored in an energy storage device such as a rechargeable battery. The rated service time defines a battery discharge duration during which time the emergency converter is required to drive the emergency light with a predetermined drive current. The maximum possible discharge duration depends on the emergency light and the capacity of the rechargeable battery.

Different energy storage devices are used depending on the application and local applicable regulations, wherein the energy storage devices may differ with regard to the capacity, presence of protection circuits and/ or sensors, employed battery chemistry and/ or nominal voltage. Some of these technical specifications have an impact on operations controlled by the emergency converter, such as failure handling, charging and discharging.

Emergency converters may be designed for exclusive use with a given type of energy storage device. However, this increases the number of variants for a manufacturer and restricts a user of an emergency lighting system to a specific type of energy storage device. Alternatively, the emergency converter can be configured to connect to and reliably operate with energy storage devices of various types. However, different energy storage devices can have different requirements, e.g., due to their battery chemistry, cell form factor or capacity. Ensuring efficient interoperability between energy storage devices of varying types and an emergency converter can be challenging and time-consuming.

### SUMMARY

In view of the above, it is an object of the invention to overcome the above-mentioned drawbacks and disadvantages. In particular, it is an object to improve the interoperability of an emergency converter and a connected energy storage device.

The foregoing and other objects are achieved by the features of the enclosed independent claims. Advantageous implementations of the present invention are further defined in the dependent claims.

According to a first aspect, the invention relates to an energy storage device for electrically supplying an emergency converter. The energy storage device comprises: an interface configured to electrically connect the energy storage device to the emergency converter, wherein the interface comprises a first, a second and a third terminal; and a memory unit configured to store information about the energy storage device; wherein the energy storage device is configured to provide a supply voltage to the emergency converter via the first and the second terminal; and wherein the memory unit is configured to transmit at least a portion of the stored information to the emergency converter via the third terminal.

This achieves the advantage that the energy storage device can communicate various types of battery related information which are relevant for the operation of the emergency converter to the converter in an efficient manner. The emergency converter can then adapt its operation accordingly based on the information.

The first, second or third terminals can be respective pins or connectors. For instance, the first and second terminal can be power supply pins, while the third terminal can be a sensing pin.

The energy storage device can provide the supply voltage to the emergency converter during an emergency situation, e.g. in case of a mains failure.

The emergency converter can adapt and/or forward the supply voltage to an emergency light connected to the converter. The emergency converter can be an emergency LED driver for supplying a connected LED load.

The energy storage device can comprise or can be a battery, in particular a rechargeable battery. The battery can be a Li-ion battery.

For example, the stored information comprises the type or identity of the energy storage device and/or operating parameters of the energy storage device and/or monitoring or diagnostic parameters of the energy storage device.

In an implementation form of the first aspect, the energy storage device comprises a protection control module (PCM); wherein the PCM comprises the memory unit.

In an implementation form of the first aspect, the memory unit is a memory IC, in particular an electrically erasable programmable read-only memory, EEPROM.

In an implementation form of the first aspect, the energy storage device further comprises a temperature sensor configured to generate an analogue temperature signal at the third terminal, wherein the analogue temperature signal represents a temperature of the energy storage device. This achieves the advantage that the energy storage device can forward temperature information to the emergency converter in an easy to evaluate way in addition to forwarding the information stored in the memory unit.

For instance, the analogue temperature signal is generating by adapting a voltage signal which is present at the third terminal based on the temperature of the energy storage device, such that an amplitude of this voltage signal represents the temperature of the energy storage device. The temperature sensor can comprise a thermistor.

In an implementation form of the second aspect, the temperature sensor is connected in parallel to the memory unit.

For example, the memory unit and the temperature sensor can be components of a sensing circuit of the energy storage device. The sensing circuit may be arranged in the PCM of the energy storage device.

In an implementation form of the first aspect, the memory unit is configured to transmit the portion of the stored information by modulating a voltage signal, in particular the analogue temperature signal, at the third terminal, such that the information is encoded in the voltage signal. This achieves the advantage various types of information, including parameters, type designations or instructions, can be communicated efficiently from the energy storage device to the emergency converter.

In an implementation form of the first aspect, the energy storage device is configured to: transmit the portion of the stored information via the third terminal during a first time interval, and to terminate the transmission of the portion of the stored information during a second time interval following the first time interval.

In an implementation form of the second aspect, the energy storage device is configured to alternate between the first and the second time intervals.

In an implementation form of the first aspect, the memory unit is further configured to receive its power supply from the connected emergency converter via the third terminal. This achieves the advantage that the memory unit can be powered efficiently without requiring a separate dedicated terminal.

According to a second aspect, the invention relates to an emergency converter, in particular an emergency LED driver. The emergency converter comprises an energy storage interface configured to connect the emergency converter to an energy storage device for electrically supplying the emergency converter; wherein the energy storage interface comprises a first, a second and a third terminal each being configured for coupling to a respective terminal of the energy storage device; wherein the emergency converter is configured to receive a supply voltage from the energy storage device via its first and second terminal; and wherein the emergency converter is configured to receive information about the energy storage device from a memory unit of the energy storage device via its third terminal. The emergency converter further comprises a control unit configured to adapt at least one operational parameter of the emergency converter based on the received information.

This achieves the advantage that the emergency converter can receive various types of battery related information which is relevant for its operation from the energy storage device in an efficient manner. The emergency converter can then adapt its operation accordingly based on the information. For instance, the emergency converter could adapt a charging algorithm based on a battery chemistry or battery capacity which is communicated via the third terminal.

The energy storage device can be a device according to the first aspect of the invention. The first, second and third terminals of the emergency converter can be designed for being connectable to the respective first, second and third terminals of the energy storage device (i.e., first to first, second to second and third to third).

In an implementation form of the second aspect, the control unit is further configured to receive an analogue temperature signal from the energy storage device via the third terminal of the emergency converter. This achieves the advantage that the emergency converter can receive temperature information from the energy storage device in an easy to evaluate way in addition to receiving the additional information from the memory unit.

For instance, an amplitude of a voltage signal at the third pin represents the temperature of the energy storage device.

In an implementation form of the second aspect, the information is encoded in a modulation of a voltage signal, in particular the analogue temperature signal, received via the third terminal of the emergency converter; and the control unit comprises an interface unit, in particular a serial interface, configured to receive and/or decode said information.

In an implementation form of the second aspect, the control unit comprises a single input which is configured to: receive the voltage signal with the modulation during a first time interval, and to receive the voltage signal without the modulation during a second time interval following the first time interval. For example, the control unit can be configured to extract the information from the modulated voltage signal during the first time interval, and to determine the temperature of the energy storage device during the second time interval based on the amplitude of the unmodulated voltage signal.

For example, the interface unit further comprises an analogue-to-digital converter (ADC) unit configured for receiving and analyzing the voltage signal without modulation, i.e., the unmodulated analogue temperature signal.

In an implementation form of the second aspect, the control unit is configured to forward a communication signal, in particular a query signal, to the energy storage device via the third terminal. For example, the emergency converter can query the energy storage device for certain information in this way. Thus, the communication between the LED driver and the battery can be a two-way communication.

According to a third aspect, the invention relates to a system comprising the energy storage device according to the first aspect of the invention and the emergency converter according to the second aspect of the invention; wherein the energy storage device and the emergency converter are coupled via their respective terminals.

In an implementation form of the third aspect, the system further comprises a central controller which is communicatively connected to the emergency converter, in particular via a DALI bus; wherein the emergency converter is configured to forward the information received from the energy storage device to the central controller.

According to a fourth aspect, the invention relates to a method for communicating data from an energy storage device to an emergency converter. The method comprises: storing information about the energy storage device in a memory unit of the energy storage device; electrically connecting the emergency converter to an interface of the energy storage device, wherein the interface comprises a first, a second and a third terminal; providing a supply voltage from the energy storage device to the emergency converter via the first and the second terminal; and transmitting at least a portion of the stored information from the energy storage device to the emergency converter via the third terminal.

The method according to the fourth aspect of the invention can be carried out using the energy storage device according to the first aspect of the invention and the emergency converter according to the second aspect of the invention.

### BRIEF DESCRIPTION OF THE DRAWINGS

Exemplary embodiments of the invention are now further explained with respect to the drawings by way of example only, and not for limitation. In the drawings:
- Fig. 1: shows a schematic diagram of an energy storage device according to an embodiment;
- Fig. 2: shows a schematic diagram of a PCM of an energy storage device according to an embodiment;
- Fig. 3: shows a schematic diagram of a system comprising an energy storage device and an emergency converter according to an embodiment;
- Fig. 4: shows an exemplary voltage signal at a terminal of an energy storage device;
- Fig. 5: shows an exemplary voltage signal at a terminal of an energy storage device;
- Fig. 6: shows an exemplary organization of information stored in a memory unit of an energy storage device; and
- Fig. 7: shows a flow diagram of a method for communicating data from an energy storage device to an emergency converter according to an embodiment.

### DETAILED DESCRIPTION OF EMBODIMENTS

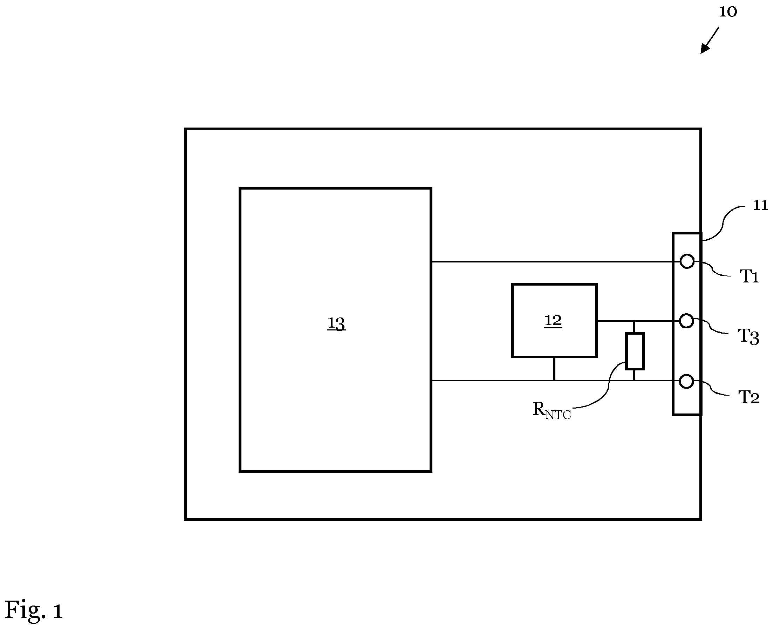

Fig. 1 shows a schematic diagram of an energy storage device 10 for electrically supplying an emergency converter according to an embodiment.

The energy storage device 10 comprises an interface 11 configured to electrically connect the energy storage device 10 to the emergency converter (not shown in Fig. 1), wherein the interface 11 comprises a first, a second and a third terminal T1, T2, T3. The energy storage device 10 further comprises a memory unit 12 configured to store information about the energy storage device; wherein the energy storage device 10 is configured to provide a supply voltage to the emergency converter via the first and the second terminal T1, T2, and wherein the memory unit 12 is configured to transmit at least a portion of the stored information to the emergency converter via the third terminal T3.

The first, second or third terminals T1, T2, T3 can be respective pins or connectors. For instance, the first and second terminal T1, T2 can be power supply pins and/or the third terminal T3 can be a sensing pin. The interface 11 may be a three-pin battery connector.

The energy storage device 10 can comprise an energy storage unit 13 which, e.g., comprises one or more battery packs or battery cells. The energy storage unit 13 can comprise at least one Li-ion battery.

The information stored in the memory unit 12 can be any information about the battery which can be beneficial for the operation of the emergency converter and/or for a central monitoring and diagnosis, e.g., in a central controller of an emergency lighting installation.

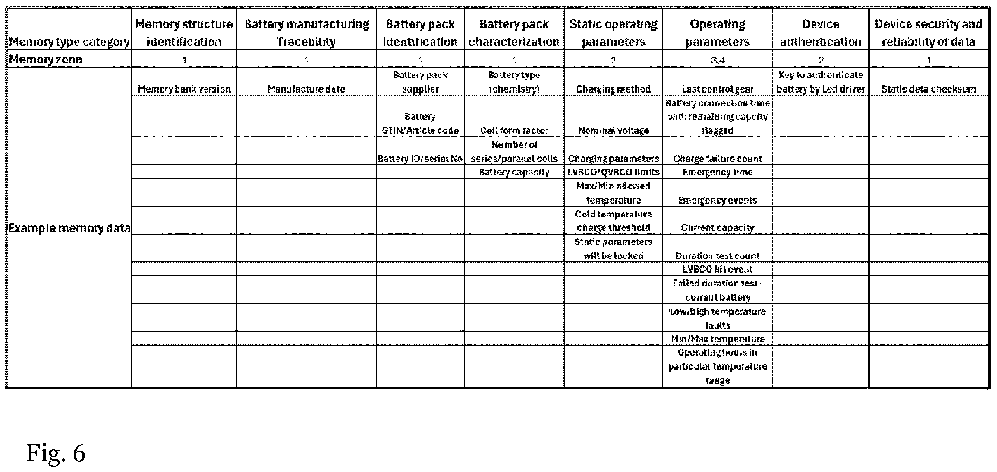

For example, the stored information comprises the type or identity of the energy storage device and/or operating parameters of the energy storage device and/or monitoring or diagnostic parameters of the energy storage device. More details about this information, their respective advantages and the organization of the storage will be discussed in conjunction with Fig. 6 below.

The memory unit may be a memory IC, in particular an electrically erasable programmable read-only memory (EEPROM).

Optionally, the energy storage device may comprise a temperature sensor R_{NTC} configured to generate an analogue temperature signal indicating a temperature of the energy storage device. This analogue temperature signal can be applied to the third terminal T3 and, thus, transmitted to the emergency converter. In this way, the third terminal T3 can additionally act as a temperature sense connector. Thus, the energy storage device 10 may be configured to communicate, in a multi-tasking fashion, both information stored in the memory unit 12 and temperature sense signals via the same terminal or pin T3 to the connected emergency converter.

The temperature sensor R_{NTC} can be or can comprise a thermistor. A thermistor is an electrical resistor whose resistance value changes reproducibly with temperature.

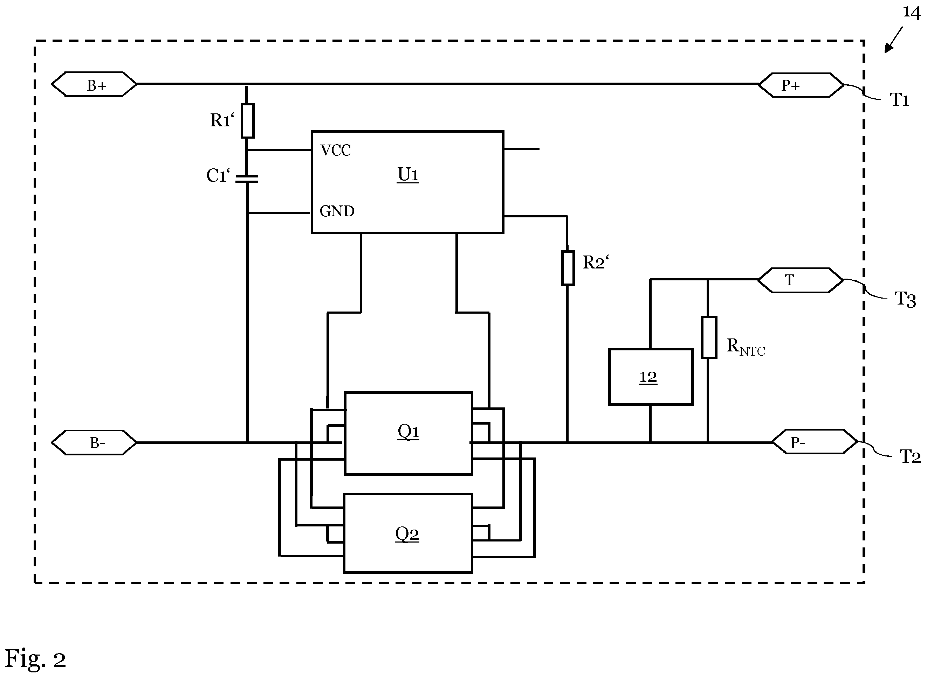

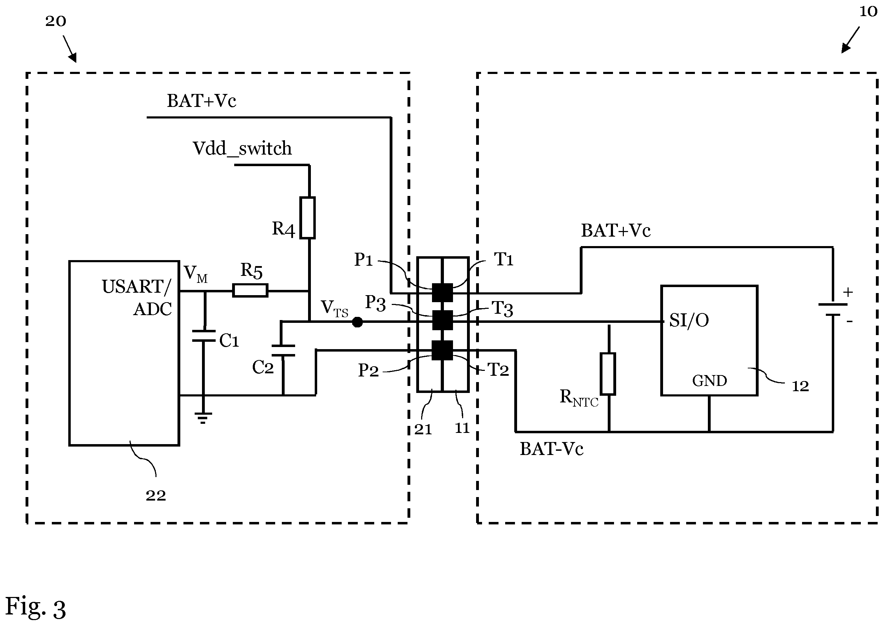

For example, the temperature sensor, i.e., the thermistor R_{NTC} is connected in parallel to the memory unit 12. The temperature sensor R_{NTC} and an output of the memory unit 12 may both be connected to the third terminal T3, as shown in Fig. 1 (and the subsequent Figs. 2 and 3). The memory unit 12 and the temperature sensor R_{NTC} may be components of a sensing circuit of the energy storage device 10.

The memory unit 12 and the temperature sensor R_{NTC} may be arranged in a protection control module (PCM) of the energy storage device 10.

Fig. 2 shows a schematic diagram of such a PCM 14 of the energy storage device 10 according to an embodiment. This PCM 14 comprises the memory unit 12, e.g. in the form of an EEPROM, and the temperature sensor R_{NTC} connected in parallel to the memory unit 12.

In general, the PCM 14 may comprise a circuit configured to protection the energy storage device 10 in case of short-circuit, over-charge and/or over-discharge situations. The PCM 14 can be arranged on a PCB board which may be arranged in a housing of the energy storage device 10.

In the circuit diagram of Fig. 2, it can be seen that an input to the PCM 14 may be formed by the battery connectors B+ and B-, which are connected to the energy storage unit 13 in order to receive electrical power. The output of the PCM 14 comprises the battery terminals post protection P+, P-, and the additional terminal T, which is the sensing pin that is used both for transmitting the stored information and the battery temperature sense signal. The PCM 14 can be connected to the interface 11, such that the outputs P+, P- are connected (or form) to terminals T1 and T2, and the output T is connected (or forms) to terminal T3.

As shown in Fig 2, the memory unit 12, e.g. a single wire serial communication EEPROM, may be connected between the temperature sense pin T (and thus the third terminal T3) and the ground terminal P- of the energy storage device 10 (and thus the second terminal T2). The temperature sensor R_{NTC}, e.g. the thermistor, can thereby remain connected between the temperature sense pin T and the P- terminal.

The PCM 14 shown in Fig. 2, further comprises integrated circuits U1, Q1 and Q2, as well as resistors R1', R2' and capacitor C1'.

Fig. 3 shows a schematic diagram of a system comprising the energy storage device 10 and an emergency converter 20 according to an embodiment. For instance, the energy storage device 10 shown in Fig. 3 can be a device 10 as shown in any one of Figs. 1 or 2.

The emergency converter 20 comprises an energy storage interface 21 configured to connect the emergency converter 20 to the energy storage device 10 for electrically supplying the emergency converter.

The energy storage interface 21 comprises a first, a second and a third terminal P1, P2, P3 each being connectable to a respective terminal T1, T2, T3 of the energy storage device 10. In particular, when the energy storage interface 21 is connected to the interface 11 of the energy storage device 10, P1 connects to T1, P2 connects to T2, and P3 connects to T3. For instance, the energy storage interface 21 may be a three-pin battery connector which is directly or indirectly connectable to the complementary interface 11 of the energy storage device 10.

The emergency converter 20 is configured to receive the supply voltage (e.g., BAT+Vc, BAT-Vc) from the energy storage device 10 via its first and second terminal P1 and P2, and to receive the transmitted information from the memory unit 12 of the energy storage device 10 via its third terminal P3, which is connectable to the third terminal T3 of the energy storage device 10.

The emergency converter 20 further comprises a control unit 22 configured to adapt at least one operational parameter of the emergency converter 20 based on the received information.

The emergency converter 20 may be an emergency LED driver for supplying a connected LED load. For instance, the energy storage device 10 provides the supply voltage to the emergency converter via the terminals T1 and T2 during an emergency situation, e.g. in case of a mains failure. The emergency converter can, in turn, adapt and/or forward this supply voltage to an emergency light connected to the converter (not shown in Fig. 3).

The memory unit 12, e.g. the EEPROM, can be further configured to receive its power supply from the connected emergency converter 20 via the third terminal T3.

For instance, the EEPROM is configured to take its operating power through a serial I/O pin (S I/O in Fig. 3), which it also uses for serial communication of the stored information with the emergency converter 20 or more specifically with the control unit 22 of the emergency converter 20.

The control unit 22 can receives the information from the memory unit 12 at an interface unit, in particular at the input or pin V_{M}. For instance, the control unit 22 is a microcontroller and V_{M} is an input pin of said microcontroller.

The emergency converter 20 can comprise a pull-up resistor R4 supplied from a e.g. 3.3V Vdd supply voltage internal to emergency converter 20. The emergency converter 20 may further comprise capacitors C1 and C2 which are selected and arranged for noise filtering purposes and are chosen to be of a small value of the order of e.g. C1 + C2 < 100pF. The further resistor R5 (e.g., a 200 ohm resistor) can be configured for minimizing of noise at the microcontroller pin V_{M}.

The interface unit of the control unit 22 may be configured combine the functionality of an USART_Tx interface for receiving an processing the information transmitted from the memory unit 12 and an analogue-to-digital converter (ADC) for receiving and processing the analogue temperature signal.

For example, the control unit 22 receives both signals (information signal and analogue temperature signal) at the same input V_{M} which is connected to an internal ADC unit and a USART_Tx interface for further processing the respective signals. With this configuration it is possible for the emergency converter 20 to communicate with the EEPROM 12 via serial communication as well as read the analogue value of the temperature signal at pin V_{M} in order to read the battery temperature in a multi-tasking fashion.

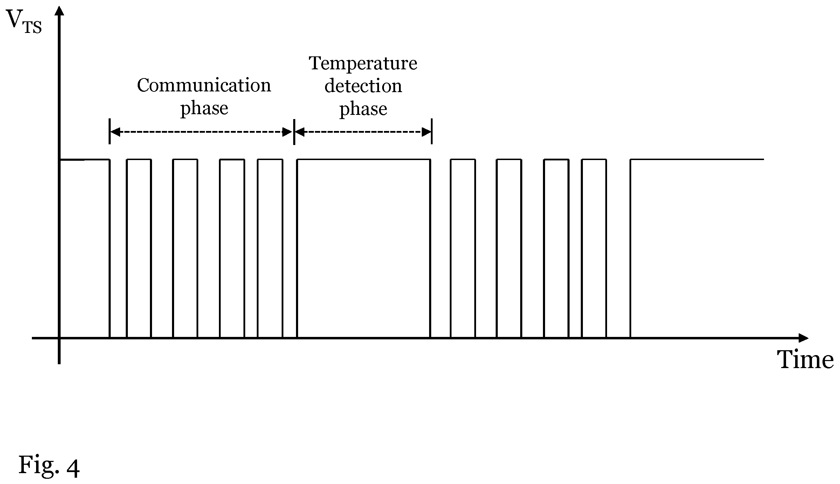

Fig. 4 shows an example of the voltage signal V_{TS} at the third terminals T3 and P3 of the energy storage device 10 and the emergency converter 20, respectively.

If the energy storage device 10 has a temperature sensor R_{NTC}, as is the case in Fig. 3, the temperature sensor R_{NTC} can adapt the amplitude of the voltage signal V_{TS} based on the temperature of the energy storage device 10. Thus, the voltage signal V_{TS} can correspond to the analogue output signal.

The memory unit 12 can further transmit the information by modulating this voltage signal V_{TS} (e.g., modulating the amplitude of the signal V_{TS}), such that the information is encoded in the voltage signal V_{TS}. The memory unit 12 can carry out this data transmission of the information during a first time interval, also referred to as communication phase. Subsequently, the memory unit 12 can terminate the transmission of the stored information, i.e. the modulation of the voltage signal V_{TS}, for a second time interval following the first time interval, also referred to as temperature detection phase. In this temperature detection phase, the amplitude of the voltage signal V_{TS} can be used by the emergency converter 20 for detecting the temperature of the energy storage device 10.

The energy storage device 10 or more specifically the memory unit 12 can be configured to alternate between communication phases and temperature detection phases, as shown in Fig. 4.

During the temperature detection phase, the control unit 22 of the emergency converter can use its ADC unit to digitalize V_{TS}, which represents the unmodulated analogue temperature signal, in order to detect the temperature based on the amplitude of V_{TS}. During the communication phase, the control unit 22 of the converter 20 can receive and decode the modulation of V signal in order extract the information, e.g., via its interface unit with USART functionality.

Thus, during the communication phase, a serial data communication takes place between the emergency converter 20 and the memory unit 12, which e.g. resides in the PCM 14 of the energy storage device 10. In contrast, during the temperature detection phase, the amplitude of the DC signal at input V_{M} is measured by the control unit 22 for battery temperature detection. This DC signal may correspond to the R_{NTC} value which is measured by the ADC unit of the control unit 22.

For example, during the communication phase the analogue temperature signal, i.e. the temperature dependent adaption of the amplitude of V_{TS}, is ignored by the control unit 22, wherein during the temperature detection phase, the temperature detection of battery takes place. Thus, both functions - temperature detection and serial communication - can be carried out via a single connection terminal T3 respectively P3.

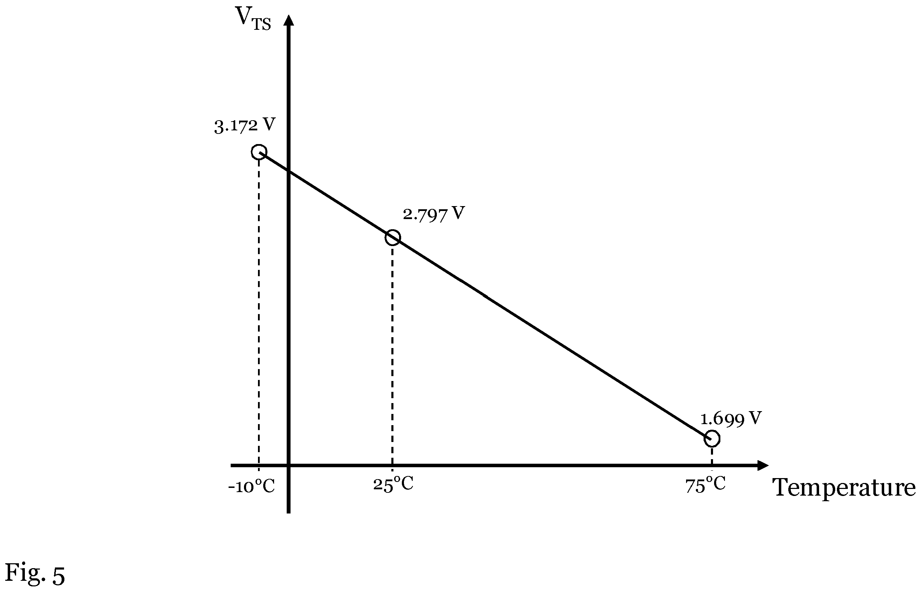

Fig. 5 shows a further example of the voltage V_{TS} at the third terminal T3 respectively P3. In particular, Fig. 5 shows the variation of the amplitude of the signal V_{TS} as a function of the temperature of the energy storage device 10. This amplitude can be measured by the control unit 22 of the converter 20 during the temperature detection phase(s) in order to detect the temperature.

The variation of the amplitude of V_{TS} may be caused by the temperature dependent resistance value of the thermistor R_{NTC}.

For example, at a battery temperature of -10°C the V_{TS} signal has an amplitude of 3.172V, while at a battery temperature of +75°C the amplitude of V_{TS} is 1.699V. The thermistor R_{NTC} resistance value for these parameters may be 44.6 Kohm at -10°C and 1.91 Kohm at +75°C, respectively.

Preferably, the memory unit 12, e.g. an EEPROM IC, may be selected such that it operates within the range of voltage levels of V_{TS} without issues.

According to a further example, the emergency converter 20 may be configured to forward a communication signal, in particular a query signal, to the energy storage device 10 via the third terminal. For example, emergency converter 20 can query the battery for certain information. Thus, the communication between the LED driver and the battery can be a two-way communication.

In yet a further example, the emergency converter 20 comprises a communication interface, e.g. a DALI interface, for communicating with a central controller the system. For instance, the information received by the converter 20 from the memory unit 12, e.g. battery related parameters, could be forwarded by the emergency converter 20 to this the central controller using, such that the converter 20 acts as a mid-point for the memory transfer between the energy storage device 10 and the central controller.

As already mentioned, various different information about the battery may be stored in the memory unit 12 and transmitted to the emergency converter 20. The stored information could be divided in different categories within the memory unit 12, which may include:
1. Memory structure identification/ Memory bank version
2. Battery Manufacturing traceability
3. Battery pack identification
4. Battery pack characterization
5. Static operating parameters of battery
6. Operational parameters of battery
7. Device authentication
8. Device security and reliability of data - checksum in case of data corruption

Fig. 6 shows an exemplary organization of information in the memory unit 12 using these eight categories. However, it is noted, that a different organization schemes for the information and/or a storage of other information than that shown in Fig. 6 is possible.

In the following, a variety of additional data is listed that may be stored in the memory unit 12 and transmitted to the emergency converter 20, along with some advantages of certain information for the operation of the converter 20:
A. Data related to battery pack identification and traceability such as:
   a. Battery pack supplier
   b. Battery pack article code
   c. Battery serial Number and ID Number, e.g. a GTIN number
   d. Battery manufacturing date
B. Additional Data related to battery pack characterization which would be beneficial for the emergency converter to e.g. set a correct basic charging algorithm, such as:
   a. Battery chemistry - NiMH or Li-ion or Ni-CAD or Na-Ion type, etc.
   b. Battery cell form factor, number of series-parallel cells and battery capacity
C. Further static operating parameters which are recommended by the battery manufacturer and could be considered in the charging algorithm for optimal performance, such as:
   a. Charging method recommended by the battery manufacturer
   b. Nominal voltage of the battery
   c. Values of charging parameters
   d. Low Voltage Battery Cut Off (LVBCO) and Quiescent Voltage Battery Cut Off (QVBCO) level
   e. Minimum and maximum battery temperature allowed for charge and discharge
   f. Cold temperature charging start threshold - which is particularly essential for Li-ion batteries
D. Further variable operating parameters for monitoring and diagnosis purposes, such as:
   a. Current and remaining capacity of the battery
   b. Last control gear or EM LED driver to which the battery was connected to
   c. Number of duration tests the battery have endured
   d. Number of failed duration tests the battery have endured
   e. How much time the battery was connected to the existing LED driver
   f. Number of emergency events the battery have endured
   g. Number of times the battery have hit its Low Voltage Battery Cut Off (LVBCO) level
   h. Minimum and Maximum temperature the battery have withstand
   i. Total number of emergency operating hours the battery have undergone
   j. Number of times the battery failed to charge
   k. Number of Low and high temperature faults happened while charging the battery
   l. Operating hours in particular temperature range for life-time prediction

For instance, by transmitting information about the remaining lifetime and capacity of the energy storage device 10, the converter 20 can reliably detect and communicate when the battery needs to be replaced, while communicating a GTIN or article number to the converter may facilitate a user for re-ordering the correct battery.

Further, the ability to communicate various battery pack related data to the emergency converter allows the converter to adapt a charge and discharge current based on the specification of the energy storage device 10 automatically as e.g. recommended by the battery manufacturer. In addition, an energy storage device 10 which stores and communicates information about its chemistry (NiMH or Li-ion etc.) allows the converter 20 to automatically detect this chemistry and set a charge/discharge algorithm.

Further, the emergency converter could communicate to a central controller (e.g., via DALI) if the energy storage device 10 is used beyond an intended operating range of temperature for warranty purposes.

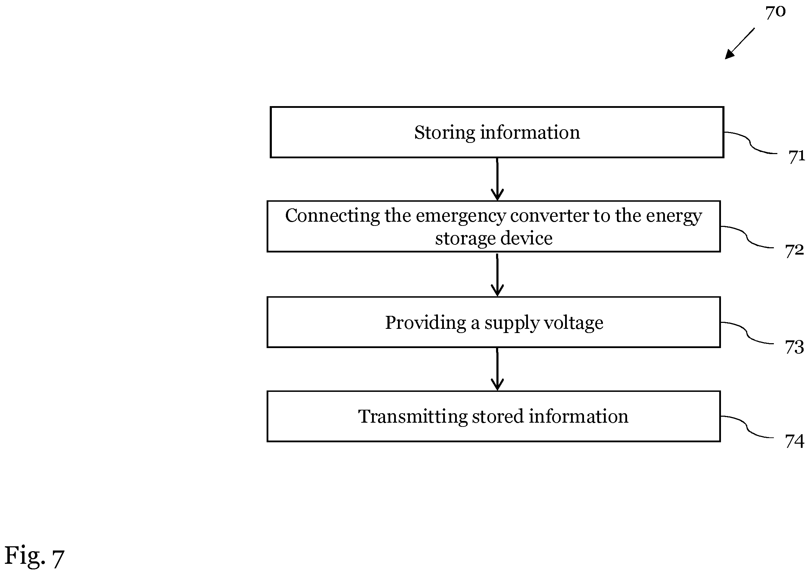

Fig. 7 shows a flow diagram of a method 70 for communicating data from the energy storage device 10 to the emergency converter 20 according to an embodiment.

The method 70 comprises: storing 71 information about the energy storage device 10 in the memory unit 12 of the energy storage device 10; electrically connecting 72 the emergency converter 20 to the interface of the energy storage device 10, wherein the interface comprises the first, the second and the third terminal T1, T2, T3; providing 73 the supply voltage from the energy storage device 10 to the emergency converter 20 via the first and the second terminal T1, T2; and transmitting 74 at least a portion of the stored information from the energy storage device 10 to the emergency converter 20 via the third terminal T3.

The above described concept of increasing the intelligence of an energy storage device, in particular a battery PCM, and allowing it to transmit battery specific information to a connected converter 20 is particular advantageous for the converter diagnosis and monitoring. Some of the additional advantages and possible use cases of this concept will be summarized the following:
- An automatic configuration of the emergency converter 20 based on the connected battery (which can be identified by the stored identification data).
- There might be no more need for a duration select jumper; the emergency duration could be set automatically.

- The LED power could be set automatically based on the battery capacity of the energy storage device 10.
- Connection of wrong batteries to the emergency converter 20 could be avoided.
- Faults could be highlighted if a wrong battery is connected to the converter 20.
- The information about the energy storage device 10 could be transmitted via the emergency converter to a central controller e.g. via DALI for maintenance purposes.
- Information about life-time analytics of the energy storage device 10 may be stored inside the memory unit 12, e.g. in an additional memory space.
- The energy storage device 10 could hold the information about its remaining capacity or service life which is helpful for maintenance.
- Rules could be set, e.g., for the converter 20 to only operate with certain energy storage devices 10.
- A statistical analysis of data is possible via the central controller, e.g. which manufacturer battery lasts longer.

Preferably, if the energy storage device 10 with the memory unit 12 is connected to an emergency converter or LED driver with no smart-battery capability (i.e., with no possibility to read out the memory unit 12), the presence of the memory unit 12 in the energy storage device 12 does not affect a possible temperature measurement via the third terminal T3. For instance, the non-smart emergency converter sees the energy storage device 10 as a (non-smart) battery without memory unit, and can still correctly measure the temperature via T3. Likewise, if a "non-smart" battery, i.e. a battery without memory unit 12, is connected to the emergency converter 20, the temperature sensing via the voltage amplitude at P3 can still work. It could be up to the software of the emergency converter to decide how to behave if a non-smart battery is connected (for example, by falling-back to default charging parameters, instead of using those read from the battery).

While various embodiments of the present invention have been described above, it should be understood that they have been presented by way of example only, and not by limitation. Numerous changes to the disclosed embodiments can be made in accordance with the disclosure herein without departing from the spirit or scope of the invention. Thus, the breadth and scope of the present invention should not be limited by any of the above-described embodiments. Rather, the scope of the invention should be defined in accordance with the following claims and their equivalents.

Although the invention has been illustrated and described with respect to one or more implementations, equivalent alterations and modifications will occur to others skilled in the art upon the reading and understanding of this specification and the annexed drawings. In addition, while a particular feature of the invention may have been disclosed with respect to only one of several implementations, such feature may be combined with one or more other features of the other implementations as may be desired and advantageous for any given or particular application.

## Claims

1. An energy storage device (10) for electrically supplying an emergency converter (20), comprising:
an interface (11) configured to electrically connect the energy storage device (10) to the emergency converter (20), wherein the interface (11) comprises a first, a second and a third terminal (T1, T2, T3); and
a memory unit (12) configured to store information about the energy storage device (10);
wherein the energy storage device (10) is configured to provide a supply voltage to the emergency converter (20) via the first and the second terminal (T1, T2); and
wherein the memory unit (12) is configured to transmit at least a portion of the stored information to the emergency converter (20) via the third terminal (T3).

2. The energy storage device (10) of claim 1,
wherein the stored information comprises the type or identity of the energy storage device (10) and/or operating parameters of the energy storage device (10) and/or monitoring or diagnostic parameters of the energy storage device (10).

3. The energy storage device (10) of claim 1 or 2,
wherein energy storage device (10) comprises a protection control module, PCM (14);
wherein the PCM (14) comprises the memory unit (12).

4. The energy storage device (10) of any one of the preceding claims,
wherein the memory unit (12) is a memory IC, in particular an electrically erasable programmable read-only memory, EEPROM.

5. The energy storage device (10) of any one of the preceding claims, further comprising:
a temperature sensor (R_{NTC}) configured to generate an analogue temperature signal at the third terminal (T3), wherein the analogue temperature signal represents a temperature of the energy storage device (10).

6. The energy storage device (10) of claim 5,
wherein the temperature sensor is connected in parallel to the memory unit (12).

7. The energy storage device (10) of any one of the preceding claims,
wherein the memory unit (12) is configured to transmit the portion of the stored information by modulating a voltage signal (V_{TS}), in particular the analogue temperature signal, at the third terminal (T3), such that the information is encoded in the voltage signal (V_{TS}).

8. The energy storage device (10) of any one of the preceding claims,
wherein the energy storage device (10) is configured to:
- transmit the portion of the stored information via the third terminal (T3) during a first time interval, and to
- terminate the transmission of the portion of the stored information during a second time interval following the first time interval.

9. The energy storage device (10) of claim 8,
wherein the energy storage device (10) is configured to alternate between the first and the second time intervals.

10. The energy storage device (10) of any one of the preceding claims,
wherein the memory unit (12) is further configured to receive its power supply from the connected emergency converter (20) via the third terminal (T3).

11. An emergency converter (20), in particular an emergency LED driver, comprising:
an energy storage interface (21) configured to connect the emergency converter (20) to an energy storage device (10) for electrically supplying the emergency converter (20);
wherein the energy storage interface (21) comprises a first, a second and a third terminal (P1, P2, P3) each being connectable to a respective terminal (T1, T2, T3) of the energy storage device (10);
wherein the emergency converter (20) is configured to receive a supply voltage from the energy storage device (10) via its first and second terminal (P1, P2); and
wherein the emergency converter (20) is configured to receive information about the energy storage device (10) from a memory unit (12) of the energy storage device (10) via its third terminal (P3);
wherein the emergency converter (20) further comprises a control unit (22) configured to adapt at least one operational parameter of the emergency converter (20) based on the received information.

12. The emergency converter (20) of claim 11,
wherein the control unit (22) is further configured to receive an analogue temperature signal from the energy storage device (10) via the third terminal (P3) of the emergency converter (20).

13. The emergency converter (20) of claim 11 or 12,
wherein the information is encoded in a modulation of a voltage signal, in particular the analogue temperature signal, received via the third terminal (P3) of the emergency converter (20);
wherein the control unit (22) comprises an interface unit, in particular a serial interface, configured to receive and/or decode said information.

14. The emergency converter (20) of claim 13,
wherein the control unit (22) comprises a single input which is configured to:
- receive the voltage signal with the modulation during a first time interval, and to
- receive the voltage signal without the modulation during a second time interval following the first time interval.

15. The emergency converter (20) of any one of claims 11 to 14,
wherein the control unit (22) is configured to forward a communication signal, in particular a query signal, to the energy storage device (10) via the third terminal (P3).

16. A system comprising,
the energy storage device (10) of any one of claims 1 to 10, and
the emergency converter (20) of any one of claims 11 to 15,
wherein the energy storage device (10) and the emergency converter (20) are coupled via their respective terminals (T1-T3, P1-P3).

17. The system of claim 16, further comprising:
a central controller which is communicatively connected to the emergency converter (20), in particular via a DALI bus;
wherein the emergency converter (20) is configured to forward the information received from the energy storage device (10) to the central controller.

18. A method (70) for communicating data from an energy storage device (10) to an emergency converter (20), comprising:
- storing (71) information about the energy storage device (10) in a memory unit (12) of the energy storage device (10);
- electrically connecting (72) the emergency converter (20) to an interface (11) of the energy storage device (10), wherein the interface (11) comprises a first, a second and a third terminal (T1, T2, T3);
- providing (73) a supply voltage from the energy storage device (10) to the emergency converter (20) via the first and the second terminal (T1, T2); and
- transmitting (74) at least a portion of the stored information from the energy storage device (10) to the emergency converter (20) via the third terminal (T3).
